# EUROPÄISCHE PATENTSCHRIFT

(11) **EP 0 863 604 B1**
(45) Veröffentlichungstag und Bekanntmachung des Hinweises auf die Patenterteilung: **12.01.2000**
(21) Anmeldenummer: 98104038.9
(22) Anmeldetag: 06.03.1998
(51) Int. Cl.: H02P 15/00, B60L 7/28

(54) **Steuer- und/oder Regelvorrichtung bzw. -verfahren für einen Retarder als Zusatzbremseinrichtung für Fahrzeuge o. dgl.**
Method and device for controlling and/or regulating a retarder used as vehicle auxiliary brake
Méthode et dispositif de contrôle et de régulation d'un ralentisseur employé comme frein auxiliaire de véhicules

(30) Priorität: 07.03.1997 DE 19709375; 24.07.1997 DE 19731847
(43) Veröffentlichungstag der Anmeldung: 09.09.1998
(73) Patentinhaber: Kloft, Lothar, 65550 Limburg (DE)
(72) Erfinder: Kloft, Lothar, 65550 Limburg (DE); Müller, Thomas, 87439 Kempten (DE)
(74) Vertreter: Müller, Eckhard, Dr.

(56) Entgegenhaltungen:
- EP-A- 0 466 941
- DE-A- 3 908 234
- DE-A- 19 532 163

## Beschreibung

Die Erfindung betrifft eine Steuer- und/oder Regelvorrichtung für einen Retarder, der mehrere Spulen oder Spulenpaare aufweist, als Zusatzbremseinrichtung, insbesondere für Fahrzeuge o. dgl., mit jeder Spule oder jedem Spulenpaar Zugeordnetem, steuerbarem Leistungshalbleiter als Stellglieder für den durch die Spulen oder Spulenpaare des Retarders fließenden Strom, der in Abhängigkeit eines oder mehrerer Betriebsparameter des Fahrzeuges und/oder Retarders einstellbar ist, wobei die Steuersignale für wenigstens eines der Stellglieder als Pulsfolge ausgebildet sind und das Tastverhältnis der Pulsfolge in Abhängigkeit der Betriebsparameter variierbar ist.

Unter einem Retarder soll im folgenden eine elektrische Wirbelstrombremse verstanden werden, die die Betriebsbremse, von bspw. Nutzfahrzeugen o. dgl. in bestimmten Situationen unterstützen oder ersetzen soll. Die Bremswirkung eines Retarders entsteht durch Aufbau eines magnetischen Feldes, das der Drehung eines Rotors aufgrund der Induktion von Wirbelströmen in dem Rotor entgegenwirkt. Der Rotor ist dabei bspw. drehfest mit der Kardanwelle des Fahrzeugs verbunden. Das Magnetfeld kann bspw. durch vier Magnetspulen oder auch Magnetspulenpaare erzeugt werden, die je nach individuell benötigter Bremsleistung nacheinander zugeschaltet werden können.

Ein Retarder mit den eingangs genannten Merkmalen ist bspw. aus der EP 0 466 941 A1 bekannt. Bei diesem Retarder ist jeder Spule ein steuerbarer Leistungshalbleiter als Stellglied für den durch die Spulen fließenden Strom zugeordnet. Die Stellglieder werden alle gemeinsam mit einem einzigen Steuersignal beaufschlagt, wobei die Steuersignale als Pulsfolge ausgebildet sind und das Tastverhältnis der Pulsfolge in Abhängigkeit der Betriebsparameter variierbar ist. Dadurch, daß sämtliche Spulen bzw. Spulenpaare durch die gemeinsame Ansteuerung der jeweiligen, den Spulen oder Spulenpaaren zugeordneten Stellglieder je nach den unterschiedlichen Betriebszuständen mit gleichem Strom beaufschlagt werden, ist insbesondere in dem Teillastbetrieb des Retarders eine besonders feinfühlige Regelung der Bremsleistung nicht immer gewährleistet. Weiterhin besteht bei diesen bekannten Retardern das Problem, daß bei einem Ausfall oder einer Zerstörung eines einzelnen Stellgliedes bzw. Leistungshalbleiters bzw. bei einem Kurzschluß in einer oder mehreren Spulen oder Spulenpaaren die gesamte Vorrichtung funktionsunfähig ist, da sämtliche Stellglieder gemeinsam angesteuert werden und eine individuelle Ansteuerung der Stellglieder nicht vorgesehen ist. Weiterhin ist in dieser Druckschrift beschrieben, die Spulen oder Spulenpaare eines Retarders mit Gleichspannung zu beaufschlagen werden, wobei jede Spule individuell an die Versorgungsgleichspannung geschaltet werden kann. Mit einer derartigen Schaltung ist jedoch nur eine äußerst grobe Einstellung der Bremsleistung des Retarders möglich, da die Abstufungen der Bremsleistungen durch die Anzahl der am Retarder vorhandenen einzelnen Spulen bzw. Spulenpaare bestimmt sind. Sind bspw. acht Spulen dem Retarder zugeordnet, kann die Bremsleistung in acht Stufen variiert werden, da jede einzelne Spule bei Schließen des entsprechenden Schalters entweder mit der vollen Versorgungsgleichspannung beaufschlagt oder aber bei geöffnetem Schalter ausgeschaltet ist.

Ein weiterer Retarder ist im einzelnen bspw. in der DE 39 08 234 A1 beschrieben, welcher durch ausdrücklichem Verweis vollinhaltlich zum Gegenstand der Offenbarung der vorliegenden Anmeldung aufgenommen wird. Der in dieser Druckschrift beschriebene Retarder kann im Fall einer Notschaltung auch an bspw. die Fahrzeugbatterie des Fahrzeuges angeschlossen werden, wenn nämlich der eigentliche Generator zur Erzeugung des durch den Retarder fließenden Stromes ausgefallen ist. Die Notschaltung weist zweckmäßiger Weise ein steuerbares elektrisches Ventil, vorzugsweise ein Thyristor zur Regelung des dem Bordnetz bzw. der Fahrzeugbatterie jeweils entnommenen Stromes auf. Aufgrund dieser kontaktlosen Steuerung treten bei einer Stromentnahme aus der Fahrzeugbatterie keine Störimpulse im Bordnetz auf, so daß die Kompatibilität des Retarders nach dem Stand der Technik bspw. mit einem Antiblockiersystem oder eine Antriebsschlupfregelung auch während des Notbetriebes erhalten bleibt. In dem Notstrombetrieb ist der durch die Spulen oder Spulenpaare des Retarders fließende Strom ebenfalls stufenlos, bspw. mittels eines Handbetätigungshebels einstellbar. Obwohl sich die bekannte Vorrichtung in der Praxis an und für sich recht gut bewährt hat, besteht jedoch ein Bedarf nach einer Verbesserung dieser Vorrichtung. Dies ist insbesondere darauf zurückzuführen, daß bei den üblichen Retardern Ströme bis zu etwa 200 A gesteuert oder geregelt werden müssen, wobei eine hohe Verlustleistung an den Leistungshalbleitern anfällt. So ist bspw. bei der Vorrichtung nach dem Stand der Technik auch vorgesehen, die Regelelektronik aus Kühlzwecken in ein am Chassis des Fahrzeuges angeordnetes Gehäuse zu integrieren.

Der Erfindung liegt demgegenüber die Aufgabe zugrunde, eine Steuer- und/oder Regelvorrichtung der eingangs genannten Art dahingehend weiterzubilden, daß eine feinfühlige Steuerung bzw. Regelung der Bremsleistung eines Retarders ermöglicht und eine erhöhte Störsicherheit bzw. Ausfallsicherheit des Retarders gegeben ist.

Diese Aufgabe wird bei der Steuer- und/oder Regelvorrichtung der eingangs genannten Art i. w. dadurch gelöst, daß jedes Stellglied mit individuellen Steuersignalen beaufschlagbar und die Bremsleistung des Retarders mittels der Steuersignale auf die Spulen oder Spulenpaare individuell bzw. variabel aufteilbar ist. Durch diese Maßnahmen besteht die Möglichkeit, die Bremsleistung des Retarders individuell und äußerst feinfühlig, auch an unterschiedliche Betriebszustände angepaßt, zu steuern oder zu regeln. Insbesondere ist es möglich, lediglich einen Teil der Spulen oder Spulenpaare mit Steuersignalen zu beaufschlagen, sofern lediglich eine geringe oder mittlere Bremsleistung des Retarders erforderlich ist. Desweiteren können ein oder mehrere Spulen bzw. Spulenpaare mit dem maximal zulässigen Strom beaufschlagt werden, während andere Spulen oder Spulenpaare nur mit einem Bruchteil dieses maximal zulässigen Stromes betrieben werden oder gänzlich abgeschaltet sind. Die letztgenannte Maßnahme bietet sich insbesondere bei einem Ausfall eines Leistungshalbleiters oder eines Kurzschlusses in einer der Spulen oder Spulenpaare des Retarders an. Die verbleibenden funktionierenden Stränge des Retarders können aufgrund der individuellen Ansteuerung jeder Spule bzw. jedes Spulenpaares problemlos weiter zur Erzeugung einer gewünschten Bremswirkung bzw. Bremsleistung betrieben werden.

Dabei bietet es sich von Vorteil an, daß der Leistungshalbleiter als Schalttransistor, bevorzugt als Power-Mosfet ausgebildet ist. Diese Schalttransistoren haben den Vorteil, daß sie praktisch verlustleistungslos im eingeschalteten bzw. ausgeschalteten Zustand betrieben werden können.

Nach einer anderen vorteilhaften Variante der Erfindung ist das Tastverhältnis der Pulsfolge eines Stellgliedes zwischen 0% und 100%, bevorzugt stufenlos, einstellbar. Je nach den individuellen Bedürfnissen kann es sich jedoch auch anbieten, das Tastverhältnis der Pulsfolge eines Stellgliedes, bspw. in Abstufungen von 10% oder 20% des maximal zulässigen Tastverhältnisses zu variieren. Jedoch kann im Prinzip durch ein schnelles periodisches Ein- und Ausschalten einer jeden Spule bzw. eines jeden Spulenpaares die Bremsleistung dieses sogenannten Stranges des Retarders je nach Einschaltdauer stufenlos eingestellt werden.

Dabei hat es sich als besonders vorteilhaft erwiesen, daß bei Erreichen eines Tastverhältnisses von 100% für die Steuersignale des n-ten Stellgliedes sukzessiv das (n + 1)-te Stellglied zugeschaltet und mit einem Steuersignal mit einem Tastverhältnis größer als 0% beaufschlagt wird. Je nach Höhe der von dem Retarder abgerufenen Bremsleistung werden somit sukzessive eine Spule bzw. ein Spulenpaar zusätzlich zu dem bereits mit dem maximal zulässigen strombetriebenen Strang oder Strängen des Retarders zugeschaltet, bis die gewünschte Bremsleistung erreicht ist. So wird bspw. bei einer Talfahrt des mit einer derartigen Vorrichtung ausgestatteten Fahrzeuges je nach jeweiligem Gefälle ein viertel, ein drittel oder ein sonstiger Wert bis hin zu der maximalen Bremsleistung des Retarders eingestellt.

Aufgrund der geringen Verlustleistung der erfindungsgemäßen Vorrichtung bietet es sich an, als Stromquelle für den Retarder eine Batterie, insbesondere die Bordbatterie des Fahrzeuges zu verwenden. Diese Maßnahme macht zusätzlichen Aufwand zur Erzeugung des Betriebsstromes des Retarders, bspw. durch einen eigenen Generator, entbehrlich.

Von Vorteil ist dabei eine Unterspannungsvorrichtung vorgesehen, die bei einem Absinken der Spannung der Stromquelle unter einen vorgegebenen Schwellwert die Steuersignale und somit den in den Retarder fließenden Strom abschaltet.

Desweiteren bietet es sich an, eine Übertemperaturvorrichtung einzusetzen, die bei einem Ansteigen der Temperatur der Vorrichtung und/oder des Retarders über einen Temperaturschwellwert die Steuersignale und damit den in den Retarder fließenden Strom abschaltet.

Weiterhin bietet es sich von Vorteil an, daß das Tastverhältnis der Pulsfolge der Steuersignale für den Retarder in Abhängigkeit der Geschwindigkeit des Fahrzeuges variierbar ist.

Insbesondere ist es nach einer eigenständigen Ausgestaltung der Erfindung, also auch unabhängig von der Ausbildung der Steuersignale als Pulsfolge, möglich, daß mittels der beliebigen Steuersignale die Bremsleistung des Retarders bei einem Anwachsen der Geschwindigkeit des Fahrzeuges, bspw. bei einer Talfahrt des Fahrzeuges, erhöht und bei einem Absenken der Geschwindigkeit, bspw. bei einem flachen Teilstück während der Talfahrt des Fahrzeuges, erniedrigt wird, so daß die Geschwindigkeit mittels des Retarders, insbesondere bei einer Talfahrt des Fahrzeuges auf einem einstellbaren Wert i. w. konstant gehalten wird.

Im einzelnen ist jede Spule oder jedes Spulenpaar des Retarders mit einem Anschluß über einen Leistungshalbleiter und einen nachfolgenden Meßwiderstand mit einem Pol der Stromquelle und der andere Anschluß der Spulen oder Spulenpaare, insbesondere gemeinsam mit dem anderen Pool der Stromquelle verbunden. Neben der Möglichkeit der feinfühligen Steuerung bzw. Regelung der Bremsleistung des Retarders ermöglicht diese Maßnahme auch einen Betrieb des Retarders, bspw. bei einem Ausfall eines Stranges des Retarders. Ein derartiger Ausfall kann bspw. aufgrund einer Zerstörung eines einzelnen Leistungshalbleiters oder eines Kurzschlusses in einer Spule oder einem Spulenpaar des Retarders möglich sein. Die verbleibenden, funktionierenden Stränge des Retarders können aufgrund der individuellen Ansteuerung jeder Spule bzw. jedes Spulenpaares problemlos weiter zur Erzeugung einer Bremswirkung betrieben werden.

Von Vorteil ist jeder Spule oder jedem Spulenpaar des Retarders eine in Sperrichtung gepolte Diode parallel zugeschaltet. Diese Maßnahme dient i. w. als Schutz der Leistungshalbleiter vor Überspannungen o. dgl., die aufgrund bspw. einer Gegeninduktion in den Spulen erzeugt werden können.

Weiterhin hat es sich als äußerst vorteilhaft erwiesen, daß das Steuersignal mittels eines Mikrocontrollers erzeugt wird, dessen Ausgang über einen Treiber an den Steuereingang des Leistungshalbleiters angeschlossen ist. Mittels des Mikrocontrollers können die verschiedenen Betriebsparameter des Fahrzeuges und/oder Retarders oder auch der Vorrichtung digital verarbeitet und in entsprechende Steuersignale für die Leistungshalbleiter überführt werden.

Von Vorteil werden dem Mikrocontroller wenigstens eines oder mehrerer der folgenden Signale in Kombination als Eingangssignale zugeführt: Sollwertsignal für die Bremsleistung des Retarders, insbesondere als digitales Stufensignal; Tacho- oder Geschwindigkeitssignal des Fahrzeuges; Tastersignal zur Aktivierung der geschwindigkeitsabhängigen Bremsleistung des Retarders und/oder Abspeicherung des momentanen Geschwindigkeitswertes des Fahrzeuges; Speicherdaten einer Speichervorrichtung zur voreinstellbaren Aufteilung der Bremsleistung auf die einzelnen Stränge bzw. Spulen oder Spulenpaare und/oder zur Zeitablaufsteuerung der Ansteuerung der Spulen oder Spulenpaare des Retarders. Insbesondere ist es mittels der Zeitablaufsteuerung möglich, ein schlagartiges Einsetzen der vollen Bremswirkung des Retarders dadurch zu verhindern, daß bspw. die Ansteuerung des vorletzten und letzten Spulenpaares oder der entsprechenden Spulen erst mit einer gewissen zeitlichen Verzögerung, bspw. von etwa 0,75 bis 1,5 Sekunden nach dem Einschalten der Vorrichtung freigegeben wird. Dies kann sich bspw. in dem Fall als vorteilhaft erweisen, wenn die Bremsleistung des Retarders mittels der Stufensignale von 0 direkt auf die maximal mögliche Stufe gestellt wird oder beim Bremsen in der höchsten Stufe das Antiblockiersystem des Fahrzeuges einsetzt, welches dadurch die Vorrichtung abschaltet und anschließend nach Inaktivierung des Antiblockiersystems wieder freigibt.

Nach einer anderen vorteilhaften Weiterbildung der Erfindung werden dem Mikrocontroller oder dem Treiber als Eingangssignale die Spannung der Stromquelle und/oder die Temperatur der Vorrichtung, insbesondere des Stellgliedes oder des Retarders, zugeführt. Hierdurch ist es möglich, unter gewissen Umständen, bspw. bei einer Niederspannungssituation der Stromquelle oder einer Übertemperatursituation der Vorrichtung oder des Retarders die Steuerung bzw. Regelung gänzlich abzuschalten, um die Vorrichtung bzw. den Retarder selbst oder die Stromquelle, bspw. die Fahrzeugbatterie zu schützen.

Es bietet sich desweiteren an, daß der Mikrocontroller einen Ausgang aufweist, dessen Signal die Aktivierung der Vorrichtung anzeigt, wobei der Ausgang bevorzugt mit einer Motorsteuerungselektronik des Motors des Fahrzeuges verbunden ist. Über diese Signale kann bspw. der Fahrzeugelektronik des Lastkraftwagens signalisiert werden, daß die Steuerung in Betrieb ist oder nicht.

Nach einer anderen Ausführungsform der Erfindung hat es sich als vorteilhaft erwiesen, daß der Mikrocontroller bzw. die Speichervorrichtung eine PC-Schnittstelle o. dgl. zur Überprüfung und ggf. Änderung der in der Speichervorrichtung abgelegten Speicherdaten aufweist. Die bspw. als EEPROM ausgebildete Speichervorrichtung kann somit auf ihren Dateninhalt überprüft werden, wobei die Möglichkeit besteht, die Aufteilung der Bremsleistung auf die einzelnen Stränge oder die Abstufung der Bremsleistung eines einzelnen Stranges oder aber auch die Zeitverzögerung des Einschalten eines zusätzlichen Stranges entsprechend zu modifizieren.

Weiterhin hat es sich als vorteilhaft erwiesen, daß bei einem Absinken des Geschwindigkeitssignals unter einen unteren Schwellwert von insbesondere etwa 4 km/h der oder die Retarder mittels des Steuersignals abgeschaltet werden. Der Schwellwert kann natürlich von Fahrzeugtyp zu Fahrzeugtyp bzw. von Retarder zu Retarder variieren und individuell eingestellt werden. Der Vorteil dieser Anordnung liegt darin, daß ein Entladen der Fahrzeugbatterie verhindert werden kann, wenn mit dem Retarder, z.B. an einer Ampel, bis zum Stillstand abgebremst wurde und dieser danach vom Fahrer des Fahrzeuges nicht abgeschaltet wird. Es versteht sich, daß nach einem Wiederanfahren der Retarder erneut aktiviert werden kann.

Nach einer anderen Ausführungsform der Erfindung ist der Ausgang bevorzugt als Relais ausgebildet und dient zur Ansteuerung insbesondere einer Kontrolleuchte oder einer sonstigen Signalvorrichtung, die dem Fahrer die Aktivierung bzw. Deaktivierung des Retarders signalisiert.

Aufgrund der individuellen Ansteuerung der Stellglieder wird ein Höchstmaß an Variabilität bzw. Flexibilität sowie Störsicherheit erreicht, insbesondere dann, wenn bspw. eine Spule oder ein Leistungshalbleiter ausgefallen sind. Es besteht jedoch auch die Möglichkeit, daß die Bremsleistung mittels der Steuersignale auf die Spulen oder Spulenpaare gleich verteilt aufteilbar ist. Hierbei bietet es sich an, bei bspw. drei Spulen oder Spulenpaaren die Bremsleistung jeder Spule oder jedes Spulenpaares auf jeweils ein Drittel der gesamten erforderlichen Bremsleistung festzulegen.

Die Erfindung betrifft auch ein Verfahren zum Betrieb einer Vorrichtung der vorhergehend beschriebenen Art, bei dem ein oder mehrere Stränge oder Spulen des Retarders völlig eingeschaltet (Tastverhältnis der Pulsfolge 100%) oder völlig ausgeschaltet sind (Tastverhältnis der Pulsfolge 0%), jedoch wenigstens ein Strang der Spule mit einem Tastverhältnis angesteuert wird, das größer als 0% und kleiner als 100% ist. Hierdurch werden die Störsignale sowie die Schaltverluste der Leistungshalbleiter reduziert. Weitere vorteilhafte Weiterbildungen des Verfahrens sind der Beschreibung und den abhängigen Ansprüchen zu entnehmen.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

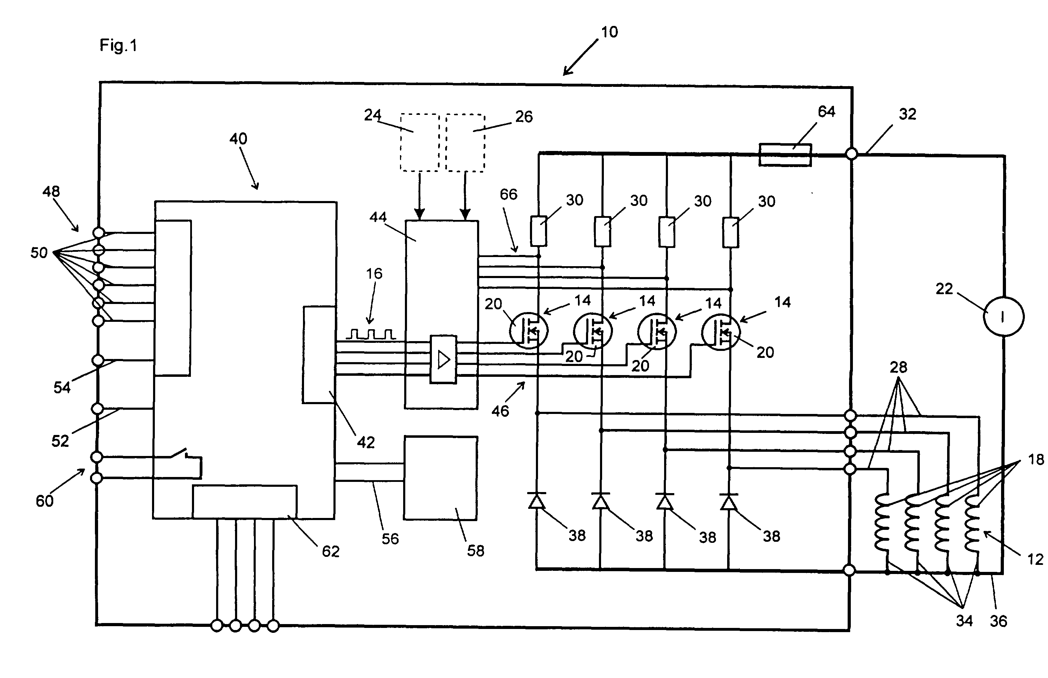

Die einzige Figur zeigt in einem Blockschaltbild eine bevorzugte Ausführungsform der erfindungsgemäßen Vorrichtung.

Die in der Figur dargestellte Steuer- und/oder Regelvorrichtung 10 dient zur Steuerung bzw. Regelung eines Retarders 12, der als Zusatzbremseinrichtung insbesondere bei Kraftfahrzeugen eingesetzt wird. Der Retarder 12 weist im vorliegenden Ausführungsbeispiel vier, nur teilweise dargestellte Spulen 18 oder Spulenpaare auf. Jeder Spule 18 oder jedem Spulenpaar ist ein Leistungshalbleiter 14 als Stellglied zugeordnet. Mit dem steuerbaren Leistungshalbleiter 14 ist der durch die einzelnen Stränge des Retarders 12 fließende Strom bspw. in Abhängigkeit verschiedener Betriebsparameter des Fahrzeuges und/oder Retarders 12 einstellbar. Dabei sind die Steuersignale 16 für die Leistungshalbleiter 14 als Pulsfolge ausgebildet, wobei das Tastverhältnis der Pulsfolge in Abhängigkeit der Betriebsparameter variierbar ist. Insbesondere ist jedes Stellglied bzw. jeder Leistungshalbleiter 14 mit individuellen Steuersignalen 16 beaufschlagbar. Die Leistungshalbleiter 14 sind im vorliegenden Ausführungsbeispiel von Vorteil als Schalttransistor, insbesondere als Power-Mosfet 20 ausgebildet. Das Tastverhältnis der Pulsfolge eines Stellgliedes bzw. Leistungshalbleiters 14 ist zwischen 0% und 100%, bevorzugt stufenlos, einstellbar.

Wie dem Blockschaltbild zu entnehmen ist, ist jede Spule 18 oder jedes Spulenpaar des Retarders 12 mit einem Anschluß 28 über einen Leistungshalbleiter 14 und einen nachfolgenden Meßwiderstand 30 mit einem Pol 32 einer Stromquelle 22 verbunden. Die anderen Anschlüsse 34 der Spulen 18 oder Spulenpaare sind insbesondere gemeinsam an den anderen Pol 36 der Stromquelle 22 angeschlossen. Weiterhin ist zwischen den Meßwiderständen 30 und dem Pol 32 der Stromquelle 22 eine Sicherung 64 vorgesehen.

Als Stromquelle 22 für den Retarder 12 wird im vorliegenden Ausführungsbeispiel die Fahrzeugbatterie verwendet. Weiterhin ist jeder Spule 18 oder jedem Spulenpaar eine in Sperrichtung gepolte Diode 38 parallel geschaltet.

Die Steuersignale 16 für die Leistungshalbleiter 14 werden mittels eines Mikrocontrollers 40 erzeugt. Die Ausgänge 42 des Mikrocontrollers 40 sind über einen Treiber 44 an die Steuereingänge 46 der Leistungshalbleiter 14 angeschlossen.

Als weitere Einrichtungen sind an den Treiber 44 eine Unterspannungsvorrichtung 24 sowie eine Übertemperaturvorrichtung 26 angeschlossen. Die Unterspannungsvorrichung 24 schaltet bei einem Absinken der Spannung der Stromquelle 22 unter einen bestimmten Schwellwert die Steuersignale 16 ab. In gleicher Weise dient die Übertemperaturvorrichtung 26 dazu, bei einem Ansteigen der Temperatur der Vorrichtung 10 und/oder des Retarders 12 über einen Schwellwert die Steuersignale 16 abzuschalten. Der Treiber 44 steht desweitern über Anschlüsse 66 mit den Meßwiderständen 30 in Verbindung, so daß jederzeit eine Information über den momentanen, durch die Spulen 18 oder Spulenpaare fließenden Strom zur Verfügung steht.

Dem Mikrocontroller 40 werden folgende Signale als Eingangssignale zugeführt:
Sollwertsignale 48 für die gewünschte Bremsleistung des Retarders 12, die bspw. in Form von digitalen Stufensignalen 50 von dem Fahrer des Fahrzeuges vorgegeben werden; Tacho- oder Geschwindigkeitssignale 52; Tastersignale 54 zur Aktivierung einer geschwindigkeitsabhängigen Bremsleistung des Retarders und/oder Abspeicherung des momentanen Geschwindigkeitswertes; Speicherdaten 56 einer an den Mikrocontroller 40 angeschlossenen Speichervorrichtung 58 zur voreinstellbaren Aufteilung der Bremsleistung auf die Spulen 18 oder Spulenpaare bzw. Stränge des Retarders 12 und/oder zur Zeitablaufsteuerung der Ansteuerung der Spulen 18 oder Spulenpaare.

Das Tastverhältnis der Pulsfolge der Steuersignale 16 für den Retarder kann bevorzugt in einem speziellen Modus in Abhängigkeit der Geschwindigkeit des Fahrzeuges variiert werden. Im einzelnen wird mittels der Steuersignale 16 die Bremsleistung des Retarders 12 bei einem Anwachsen der Geschwindigkeit des Fahrzeuges erhöht und bei einem Absinken der Geschwindigkeit erniedrigt, so daß die Geschwindigkeit auf einem einstellbaren Wert i. w. konstant gehalten wird.

Auch besteht die Möglichkeit, daß bei Erreichen eines Tastverhältnisses von 100% für die Steuersignale 16 des n-ten Stellglied sukzessiv das (n + 1)-te Stellglied zugeschaltet und mit einem Steuersignal 16 mit einem Tastverhältnis größer als 0% beaufschlagt wird.

Auch können dem Mikrocontroller 40 oder dem Treiber 44 als Eingangssignal die Spannung der Stromquelle 20 und/oder die Temperatur der Vorrichtung 10, insbesondere des Stellgliedes bzw. Leistungshalbleiters 14 oder des Retarders 12 bzw. der Spulen 18 zugeführt werden. Der Mikrocontroller 40 weist desweiteren einen Ausgang 60 auf, dessen Signal die Aktivierung der Vorrichtung 10 anzeigt, wobei der Ausgang 60 bevorzugt mit einer Motorsteuerungselektronik des Fahrzeuges verbunden ist. Schließlich weist der Mikrocontroller 40 bzw. die Speichervorrichtung 58 eine PC-Schnittstelle 62 zur Überprüfung und ggf. Änderung der in der Speichervorrichtung 58 abgelegten Speicherdaten 56 auf.

Von Vorteil sind der Mikrocontroller 40 und die Speichervorrichtung 58 auf einer Steckplatine angeordnet, die als Option zwischen den Treiber 44 und die Eingänge für die Sollwertsignale 48 geschaltet werden kann. In der Grundversion ohne diese Platine wird somit jeder Leistungshalbleiter 14 durch eine entsprechende Vorgabe von Sollwertsignalen 48 mit den jeweiligen Steuersignalen 16 beaufschlagt. Ist jedoch die Platine mit dem Mikrocontroller 40 und der Speichervorrichtung 58 zugeschaltet, können zusätzliche Funktionen, wie z.B. eine Mehrstufenbetrieb, stufenlose Einteilung der Bremswirkung, Konstantgeschwindigkeitsregelung o. dgl. verwirklicht werden. Bereits in der Grundversion der Steuervorrichtung 10 ist eine Unterspannungsvorrichtung 24 vorgesehen, die bspw. bei einem Absinken der Spannung der Fahrzeugbatterie unter 20 Volt die Ansteuerung des Retarders abschaltet, um ein weiteres Entladen der Batterie zu verhindern. Ebenso ist in der Grundversion ohne Mikrocontroller 40 auch eine Übertemperaturvorrichtung 26 vorgesehen, die bspw. bei einem Ansteigen der Temperatur der Steuerung über 110° C den Treiber 44 und damit die Steuersignale 16 für die Leistungshalbleiter 14 abschaltet.

Ein Vorteil des Einsatzes der Power-Mosfets 20 als Leistungshalbleiter 14 besteht auch darin, daß beim Schalten keine oder allenfalls nur sehr geringe Störungen auftreten, wodurch insoweit die strengen EMV-Vorschriften der Fahrzeughersteller eingehalten werden können. Der andere Vorteil der Vorrichtung 10 besteht darin, daß die Steuerung des Retarders 12 praktisch verlustleistungsfrei erfolgen kann. Als weiterer vorteilhafter Aspekt der Steuerung bzw. Regelung ist zu erwähnen, daß durch ein schnelles, periodisches Ein- und Ausschalten eines Spulenpaares bzw. einer Spule 18 die Bremsleistung des jeweiligen Stranges je nach Einschaltdauer bzw. Tastverhältnis stufenlos zwischen 0% und 100% des maximal möglichen Wertes eingestellt werden kann. Sind bspw. 100% der maximalen Bremsleistung des Stranges bzw. Spulenpaares oder der Spule 18 erreicht, wird der nächste Strang mit voller Bremsleistung zugeschaltet, wobei die Ansteuerung des ersten Stranges wieder bei 0% beginnt. Dieser Vorgang setzt sich fort, bis alle vier Spulen 18 oder Spulenpaare eingeschaltet sind. Insgesamt ist es dadurch möglich, die Bremsleistung des Retarders 12 stufenlos einzustellen. Die Einteilung der Bremsleistung ist somit auch nicht mehr auf nur vier feste Stufen, nämlich das stufenweise Zuschalten eines jeden Stranges mit sofortiger maximaler Bremsleistung beschränkt, sondern kann in beliebigen, bspw. auch sechs Stufen erfolgen.

Im sogenannten Konstantgeschwindigkeitsbetrieb, der bevorzugt bei einer Talfahrt des Fahrzeuges zum Einsatz kommt, wird dem Mikrocontroller 40 ein Geschwindigkeitssignal 52 zugeführt. Auf Knopfdruck wird ein Tastersignal 54 erzeugt und die momentane Geschwindigkeit des Fahrzeuges gespeichert. Der Mikrocontroller 40 regelt nun bei Bergabfahrt die Bremsleistung des Retarders 12 in der Weise, daß die Geschwindigkeit praktisch konstant gehalten wird.

Die Steuer- und Regelvorrichtung 10 verfügt von Vorteil auch über eine sogenannte Stillstandsabschaltung. Empfängt der Mikrocontroller 40 über das Geschwindigkeitssignal 52 keine Impulse mehr, was bspw. bei einer Geschwindigkeit unterhalb von 4 km/h eintreten kann, wird der Retarder 12 bspw. nach 2 Sekunden abgeschaltet. Der Schwellwert der Geschwindigkeit, bei der der Retarder 12 abgeschaltet wird, kann natürlich individuell variiert werden. Auch die Dauer der zeitlichen Verzögerung kann zwischen 0 und mehreren Sekunden betragen. Durch diese Maßnahme wird ein Entladen der Fahrzeugbatterie, insbesondere der Stromquelle 22 für den Fall verhindert, wenn mit dem Retarder 12 bspw. an einer Ampel das Fahrzeug bis zum Stillstand abgebremst wird und anschließend der Retarder 12 vom Fahrer des Fahrzeuges nicht abgeschaltet wird. Es versteht sich, daß eine selbsttätige Aktivierung des Retarders 12 vorgesehen sein kann, sobald das Geschwindigkeitssignal 52 wieder oberhalb eines bestimmten, unter Umständen unterschiedlich eingestellten Schwellwertes liegt.

Der Ausgang 60 kann bspw. als Relaisausgang ausgebildet sein, der mit der Motorsteuerungselektronik des Fahrzeuges verbunden ist. Über diesen Relaisausgang kann damit der Motorsteuerungselektronik mitgeteilt werden, ob der Retarder 12 in Betrieb ist oder nicht. Somit besteht bspw. die Möglichkeit, daß mittels der Motorsteuerungselektronik eine Kontrolleuchte oder eine sonstige Signalquelle im Fahrzeug aktiviert bzw. deaktiviert werden kann, um dem Fahrer mitzuteilen, daß der Retarder 12 aktiviert ist oder nicht.

Die Möglichkeit, die Bremsleistung auf die verschiedenen Stufen bzw. Spulen 18 oder Spulenpaare aufzuteilen, hat sich in der Praxis als äußerst vorteilhaft erwiesen.

Die Steuerung bzw. Regelung ist ausgangsseitig kurzschlußfest, so daß bspw. im Falle des Auftretens eines Defektes an einem Strang bzw. einer Spule 18 des Retarders nur dieser Strang bzw. diese Spule 18 abgeschaltet wird, ohne daß die Vorrichtung 10 Schaden nimmt. Die restlichen Spulen 18 bzw. Spulenpaare oder -stränge des Retarders 12 können weiterhin als Zusatzbremseinrichtung aktiviert werden.

Die Vorrichtung kann bevorzugt wie folgt ausgelegt werden:
- Versorgungsspannung:: 20 Volt - 30 Volt
- maximaler Ausgangsstrom:: 4 x 50 A
- Temperaturbereich:: -40° C bis 85° C

Im weiteren soll die Funktionsweise der Vorrichtung 10 anhand eines Beispiels erläutert werden. Aktiviert wird die Steuerung bzw. Regelung bspw. über das Einschalten der ersten Stufe der Stufensignale 50. Zunächst werden dann die Speicherdaten 56 der Speichervorrichtung 58, die bspw. als EEPROM ausgebildet sein kann, ausgelesen. Durch die Speicherdaten 56 ist z. B. festgelegt, welche Bremsleistung der jeweiligen Stufe der Stufensignale 50 zuzuordnen ist. Während ohne die Platine mit dem Mikrocontroller 40 nur eine Ansteuerungen des Retarders 12 in den Stufen 25%, 50%, 75% und 100% durch entsprechendes Zuschalten einer weiteren Spule 8 bzw. eines Stranges des Retarders 12 möglich ist, können durch ein periodische Ein- und Ausschalten bspw. des ersten Strangs bzw. der ersten Spule 18 bzw. Spulenpaares durch den Mikrocontroller 40 auch im Prinzip beliebige Zwischenwerte erzeugt werden. Dies ist darauf zurückzuführen, daß die Steuersignale 16 für den Leistungshalbleiter 14 als Pulsfolge ausgebildet sind und daß das Verhältnis der Pulsfolge, bspw. in Abhängigkeit der Betriebsparameter variierbar ist. Wird bspw. eine Bremsleistung des Retarders 12 von 60% angefordert, kann dies aufgrund der in der Speichervorrichtung 58 abgelegten Speicherdaten 56 wie folgt realisiert werden:
Strang 1: 40% der Zeit eingeschaltet, 60% der Zeit aus ausgeschaltet,
Strang 2: dauernd eingeschaltet,
Strang 3: dauernd eingeschaltet und
Strang 4: dauernd ausgeschaltet.

Somit werden durch das permanente Einschalten des zweiten und dritten Stranges bzw. der zweiten und dritten Spule 18 des Retarders 12 50% der maximalen Bremsleistung des Retarders erzielt. Die restlichen 10% übernimmt werden vom ersten Strang 1 beigetragen, der 2/5-tel der Gesamtzeit eingeschaltet ist. Dabei wird die Frequenz der Impulsfolge so hoch gewählt, daß ein ruckfreier Betrieb des Retarders bzw. ein ruckfreies Einsetzen der Bremsleistung gewährleistet ist.

Auch besteht die Möglichkeit, einen oder mehrere Stränge bzw. Spulen 18 oder Spulenpaare des Retarders dauerhaft zuzuschalten (mit einem Tastverhältnis von 100%), so daß nur ein Strang bzw. Spule 18 oder Spulenpaar mit einer Pulsfolge, also pulsweitenmoduliert, angesteuert wird. So kann zur Erzeugung einer Retarderleistung von z.B. 20% der Maximalleistung ein Strang oder vier Stränge mit einem Tastverhältnis von 80% angesteuert werden, während die anderen Stränge ausgeschaltet sind. Werden hingegen z.B. 30% der Maximalleistung des Retarders benötigt, kann ein Strang dauerhaft eingeschaltet sein (Tastverhältnis 100%), während ein zweiter Strang mit einem Tastverhältnis von 20% betrieben wird und die weiteren Stränge abgeschaltet sind. Der Vorteil des Verfahrens zum Betrieb des Retarders besteht darin, daß Störsignale im reduziertem Maß auftreten und geringe Schaltleistungen für das Schalten der Leistungshalbleiter benötigt werden. Insoweit lassen sich die Schaltverluste erheblich verringern.

Der Treiber 44 erzeugt Steuersignale 16 einer Spannung, die ausreichend für das Einschalten der Leistungshalbleiter 14 ist. Liegt bspw. an dem Treibereingang eine Spannung von mehr als 2 Volt an, wird der entsprechende Leistungshalbleiter 14 durchgeschaltet und die Spule 18 bzw. das Spulenpaar mit Strom beaufschlagt. Über die Meßwiderstände 30 wird der durch den jeweiligen Strang des Retarders 12 fließende Strom vom Treiber 44 gemessen, so daß die Möglichkeit besteht, den jeweiligen Strang bei einem Überschreiten des maximal zulässigen Stromes abzuschalten.

Um ein schlagartiges Einsetzen der vollen Bremswirkung des Retarders 12 zu verhindern, kann die Ansteuerung bspw. des dritten und vierten Spulenpaares bzw. -stranges erst mit einer gewissen zeitlichen Verzögerung, bspw. von 0,75 Sekunden bzw. 1,5 Sekunden nach dem Einschalten der Steuerung, erfolgen. Diese zeitliche Verzögerung kommt bspw. dann zur Wirkung, wenn mittels der Stufensignale 50 der Retarder 12 direkt auf die maximal zulässige Bremsleistung gestellt wird. Auch kann dieser Fall beim Bremsen in der höchsten Stufe auftreten, wenn gleichzeitig das Antiblockiersystem des Fahrzeuges einsetzt, wodurch zunächst die Steuerung des Retarders 12 abgeschaltet und anschließend nach Deaktivierung des Antiblockiersystems wieder eingeschaltet wird.

Für den Fall, daß die Konstantgeschwindigkeitsregelung aktiviert wird, wird die individuelle Wahl der Stufensignale 50 als Sollwertsignal 48 ignoriert, so daß die Steuerung zunächst abgeschaltet werden muß, um den Konstantgeschwindigkeitsbetrieb zu beenden.

### Bezugszeichenliste

- 10 -: Vorrichtung
- 12 -: Retarder
- 14 -: Leistungshalbleiter
- 16 -: Steuersignal
- 18 -: Spule, Spulenpaar
- 20 -: Power-Mosfet
- 22 -: Stromquelle
- 24 -: Unterspannungsvorrichtung
- 26 -: Übertemperaturvorrichtung
- 28 -: Anschluß
- 30 -: Meßwiderstand
- 32 -: Pol
- 34 -: Anschluß
- 36 -: Pol
- 38 -: Diode
- 40 -: Mikrocontroller
- 42 -: Ausgang
- 44 -: Treiber
- 46 -: Steuereingang
- 48 -: Sollwertsignal
- 50 -: Stufensignal
- 52 -: Geschwindigkeitssignal
- 54 -: Tastersignal
- 56 -: Speicherdatum
- 58 -: Speichervorrichtung
- 60 -: Ausgang
- 62 -: PC-Schnittstelle
- 64 -: Sicherung
- 66 -: Anschluß

## Patentansprüche

1. Steuer- und/oder Regelvorrichtung (10) für einen Wirbelstrom retarder (12), der mehrere Spulen (18) oder Spulenpaare aufweist, als Zusatzbremseinrichtung, insbesondere für Fahrzeuge o. dgl., mit jeder Spule (18) oder jedem Spulenpaar zugeordnetem, steuerbarem Leistungshalbleiter (14) als Stellglieder für den durch die Spulen (18) oder Spulenpaare des Retarders (12) fließenden Strom, der in Abhängigkeit eines oder mehrerer Betriebsparameter des Fahrzeuges und/oder Retarders (12) einstellbar ist, wobei die Steuersignale (16) für wenigstens eines der Stellglieder als Pulsfolge ausgebildet sind und das Tastverhältnis der Pulsfolge in Abhängigkeit der Betriebsparameter variierbar ist, dadurch gekennzeichnet, daß jedes Stellglied mit individuellen Steuersignalen (16) beaufschlagbar und die Bremsleistung mittels der Steuersignale (16) auf die Spulen (18) oder Spulenpaare individuell bzw. variabel aufteilbar ist.

2. Vorrichtung nach Anspruch, dadurch gekennzeichnet, daß der Leistungshalbleiter (14) als Schalttransistor ausgebildet ist.

3. Vorrichtung nach Anspruch 2, dadurch gekennzeichnet, daß der Leistungshalbleiter (14) als Power-Mosfet (20) ausgebildet ist

4. Vorrichtung nach einem der vorhergehenden Ansprüche, dadurch gekennzeichnet, daß das Tastverhältnis der Pulsfolge eines Stellgliedes zwischen 0% und 100% einstellbar ist.

5. Vorrichtung nach Anspruch 4, dadurch gekennzeichnet, daß das Tastverhältnis stufenlos einstellbar ist.

6. Vorrichtung nach einem der vorhergehenden Ansprüche, dadurch gekennzeichnet, daß bei Erreichen eines Tastverhältnisses von 100% für die Steuersignale des n-ten Stellgliedes sukzessiv das (n + 1)-te Stellglied zugeschaltet und mit einem Steuersignal (16) mit einem Tastverhältnis größer als 0% beaufschlagt wird.

7. Vorrichtung nach einem der vorhergehenden Ansprüche, dadurch gekennzeichnet, daß als Stromquelle (22) für den Retarder (12) eine Batterie verwendet wird.

8. Vorrichtung nach einem der vorhergehenden Ansprüche, dadurch gekennzeichnet, daß eine Unterspannungsvorrichtung (24) bei Absinken der Spannung der Stromquelle (22) unter einen Schwellwert die Steuersignale (16) abschaltet.

9. Vorrichtung nach einem der vorhergehenden Ansprüche, dadurch gekennzeichnet, daß eine Übertemperaturvorrichtung (26) bei Ansteigen der Temperatur der Vorrichtung (10) und/oder des Retarders (12) über einen Schwellwert, die Steuersignale (16) abschaltet.

10. Vorrichtung nach einem der vorhergehenden Ansprüche, dadurch gekennzeichnet, daß das Tastverhältnis der Pulsfolge der Steuersignale (16) für den Retarder (12) in Abhängigkeit der Geschwindigkeit des Fahrzeuges variierbar ist.

11. Vorrichtung nach einem der vorhergehenden Ansprüche, dadurch gekennzeichnet, daß mittels der Steuersignale (16) die Bremsleistung des Retarders (12) bei einem Anwachsen der Geschwindigkeit des Fahrzeuges erhöht und bei einem Absenken der Geschwindigkeit erniedrigt wird, so daß die Geschwindigkeit auf einem einstellbaren Wert i. w. konstant gehalten wird.

12. Vorrichtung nach einem der vorhergehenden Ansprüche, dadurch gekennzeichnet, daß jede Spule (18) oder jedes Spulenpaar des Retarders (12) mit einem Anschluß (28) über einen Leistungshalbleiter (14) und einen nachfolgenden Meßwiderstand (30) mit einem Pol (32) der Stromquelle (22) und der andere Anschluß (34) der Spulen (18) oder Spulenpaare, insbesondere gemeinsam mit dem anderen Pool (36) der Stromquelle (22) verbunden sind.

13. Vorrichtung nach Anspruch 12, dadurch gekennzeichnet, daß jeder Spule (18) oder jedem Spulenpaar eine in Sperrichtung gepolte Diode (38) parallel geschaltet ist.

14. Vorrichtung nach einem der vorhergehenden Ansprüche, dadurch gekennzeichnet, daß das Steuersignal (16) mittels eines Mikrocontrollers (40) erzeugt wird, dessen Ausgang (42) über einen Treiber (44) an den Steuereingang (46) des Leistungshalbleiters (14) angeschlossen ist.

15. Vorrichtung nach Anspruch 14, dadurch gekennzeichnet, daß dem Mikrocontroller (40) wenigstens eines der folgenden Signale als Eingangssignale zugeführt: Sollwertsignal (48) für die Bremsleistung des Retarders (12), insbesondere als digitales Stufensignal (50); Tacho- oder Geschwindigkeitssignal (52); Tastersignal (54) zur Aktivierung der geschwindigkeitsabhängigen Bremsleistung des Retarders (12) und/oder Abspeicherung des momentanen Geschwindigkeitswertes; Speicherdaten (56) einer Speichervorrichtung (58) zur voreinstellbaren Aufteilung der Bremsleistung auf die Spulen (18) oder Spulenpaare und/oder zur Zeitablaufsteuerung der Ansteuerung der Spulen (18) oder Spulenpaare des Retarders (12).

16. Vorrichtung nach einem der Ansprüche 14 oder 15, dadurch gekennzeichnet, daß dem Mikrocontroller (40) oder dem Treiber (44) als Eingangssignal die Spannung der Stromquelle (22) und/oder die Temperatur der Vorrichtung (10), insbesondere des Stellgliedes oder des Retarders (12), zugeführt werden.

17. Vorrichtung nach einem der Ansprüche 14 bis 16, dadurch gekennzeichnet, daß der Mikrocontroller (40) einen Ausgang (60) aufweist, dessen Signal die Aktivierung der Vorrichtung (10) anzeigt, wobei der Ausgang (60) bevorzugt mit einer Motorsteuerungselektronik des Fahrzeuges verbunden ist.

18. Vorrichtung nach einem der Ansprüche 14 bis 17, dadurch gekennzeichnet, daß der Mikrocontroller (40) bzw. die Speichervorrichtung (58) eine PC-Schnittstelle (62) zur Überprüfung und ggf. Änderung der in der Speichervorrichtung (58) abgelegten Speicherdaten aufweist.

19. Vorrichtung nach einem der Ansprüche 14 bis 18, dadurch gekennzeichnet, daß bei einem Absinken des Geschwindigkeitssignals unter einen unteren Schwellwertes von insbesondere etwa 4 km/h der oder die Retarder (12) mittels des Steuersignals (16), insbesondere mit einer kurzen Verzögerung abgeschaltet werden.

20. Vorrichtung nach Anspruch 17 dadurch gekennzeichnet, daß der Ausgang (60) bevorzugt als Relaisausgang ausgebildet ist und zur Ansteuerung insbesondere einer Kontrolleuchte dient, die dem Fahrer die Aktivierung bzw. Deaktivierung des Retarders (12) signalisiert.

21. Verfahren zum Betrieb einer Vorrichtung nach einem der Ansprüche 1 bis 20, dadurch gekennzeichnet, daß man ein oder mehrere Stellglieder mit jeweils einem Steuersignal beauschlagt dessen Tastverhältnis bei 0% oder 100% liegt, und wenigstens ein weiteres Stellglied mit einer Pulsfolge beaufschlagt, deren Tastverhältnis größer als 0% und kleiner als 100% ist.

22. Verfahren nach Anspruch 21, dadurch gekennzeichnet, daß bei Erreichen eines Tastverhältnisses von 100% für die Steuersignale des n-ten Stellgliedes sukzessiv das (n + 1)-te Stellglied zugeschaltet und mit einem Steuersignal (16) mit einem Tastverhältnis größer als 0% beaufschlagt wird.

## Claims

1. Controlling and/or regulation device (10) for a retarder (12) which includes several coils (18) or pairs of coils as supplementary braking system especially for vehicles or suchlike with an assigned to every coil (18) or pair of coils, controllable power semiconductor (14) as setting device for the power streaming through every coil (18) or pair of coils of the retarder (12), which is adjustable in dependency of one or more operation parameters of the vehicle and/or retarder (12), but the control signal (16) of at least one of the setting devices is qualified as pulse sequence and the scanning proportion of the pulse sequence is variable in dependency of the operation parameter, characterized through the fact that each setting device can be served with individual control signals (16) and the brake power can be devided via individual respectively variable control signals (16).

2. Device regarding claim 2, characterized through a power semiconductor (14) qualified as switch transistor.

3. Device regarding claim 2, characterized through a power semiconductor (14) qualified as power-mosfet (20).

4. Device regarding former claims characterized through a scanning proportion of the pulse sequence of a setting device that can be adjusted between 0% and 100%.

5. Device regarding claim 4 characterized through a gradeless adjustable scanning proportion.

6. Device regarding former claims characterized through the fact when reaching a scanning proportion of 100% for the control signals of the n setting device gradually the (n + 1) setting device can be switched in addition and can be served with a control signal (16) with a scanning proportion bigger than 0%.

7. Device regarding former claims characterized through a battery being used as power resource (22) for the retarder.

8. Device regarding former claims characterized through a device for measuring too low voltage (24) which switches offthe control signals (16) when the voltage of the power resource (22) drops off under a certain required value.

9. Device regarding former claims characterized through a device for measuring too high temperature (26) switches offthe control signals (16) when the temperature of the device (10) and/or the retarder (12) rises higher than a certain required value.

10. Device regarding former claims characterized through a scanning proportion of the pulse sequence of the control signals (16) for a retarder (12) which is variable in dependency ofthe speed ofthe vehicle.

11. Device regarding former claims characterized through a control signal (16) which holds the speed constant on an adjustable value by increasing the brake power of the retarder (12) by increasing speed and decreasing power by decreasing the speed.

12. Device regarding former claims characterized through a coil (18) or pair of coils of the retarder (12) is connected with a connection (28) via a power semiconductor (14) and a following measure resistance (30) with a pole (32) of the power resource (22) and the other connection (34) is connected to the coil (18) or pair of coils with the other pole (36) of the power resource (22).

13. Device regarding claim 12, characterized through a diode (38) which is switched parallel in locking device direction to each coil (18) or pair of coils.

14. Device regarding former claims characterized through a control signal (16) produced by means of a micro controller (40) which exit (42) is connected to the control entry (46) of the power semiconductor (14) via a driver (44).

15. Device regarding claim 14, characterized through a micro controller (40( which at least receives as entry signals: signal of required value (48) for brake power ofthe retarder (12), especially a digital grade signal (50); speedometer or speed signal (52); scanning signal (54) for activating the speed depending brake power ofthe retarder (12) and/or saving of the present speed; saving data (56) of a saving device (58) for preadjusting of the brake power to the coils (18) or pairs of coils and/or period of time control of controlling the coils (18) or pairs of coils of the retarder (12).

16. Device regarding claims 14 or 15 characterized through a micro controller (40) or a driver (44) which receives the voltage of the power resource (22) and/or the temperature of the device (10), of the setting device or of the retarder (12) as entry signal.

17. Device regarding the claims 14 to 16 characterized through a micro controller (40) which is qualified through an exit (60) which signals show the activation of the device (10) where the exit (60) is preferably connected with the motor control electronic of the vehicle.

18. Device regarding the claims 14 to 17 characterized through a micro controller (40) respectively a saving device (58) which is qualified through an interface for checking and should the situation arise changing of the data saved in the saving device (58).

19. Device regarding the claims 14 to 18 characterized through control signal (16) which switches off the retarder (12) after a short delay when the speed signal drops off under a required value of ca. 4 km/h.

20. Device regarding claim 17 characterized through an exit (60) preferably qualified as a relais exit for controlling a control lamp which indicates to the driver the activation respectively deactivation of the retarder (12).

21. Method of powering a device regarding claims 1 to 20 characterized through one or more setting devices served with a control signal each which scanning proportion is at 0% or 100% and at least one setting device is served with a pulse sequence which scanning proportion is bigger than 0% and smaller than 100%.

22. Method regarding claim 21 characterized through the fact that when reaching a scanning proportion of 100% the (n + 1) setting device will be switched on gradually in addition to the n setting device and is served with a control signal (16) with a scanning proportion bigger than 0%.

## Revendications

1. Un dispositif de commande et/ou de réglage (10) pour un ralentisseur à courants parasites (12), comportant plusieurs bobines (18) ou paires de bobines, servant de dispositif auxiliaire de freinage, en particulier pour les véhicules ou similaires, avec un semiconducteur de puissance réglable (14), affecté à chaque bobine (18) ou chaque paire de bobines, servant de composant de réglage pour le courant qui passe par les bobines (18) ou paires de bobines du ralentisseur (12), courant qui est réglable en fonction d'un ou plusieurs paramètres de fonctionnement du véhicule et/ou du ralentisseur. A cette fin, les signaux de commande (16) pour au moins un des composants de réglage sont sous la forme d'un train d'impulsions, et le taux d'impulsions du train d'impulsions est variable en fonction des paramètres de fonctionnement, ayant pour caractéristique le fait que chaque composant de réglage peut être alimenté par des signaux de commande individuels (16), et la puissance de freinage peut se répartir de façon individuelle, voire variable, sur les bobines (18) ou paires de bobines, au moyen des signaux de commande (16).

2. Dispositif selon la revendication, ayant pour caractéristique le fait que le semiconducteur de puissance (14) est un transistor de commutation.

3. Dispositif selon la revendication 2, ayant pour caractéristique le fait que le semiconducteur de puissance (14) est un dispositif MOS de puissance à effet de champ (20)

4. Dispositif selon une des revendications précédentes, ayant pour caractéristique le fait que le taux d'impulsions du train d'impulsions d'un composant de réglage est réglable de 0% à 100%.

5. Dispositif selon la revendication 4, ayant pour caractéristique le fait que le taux d'impulsion est réglable sans paliers.

6. Dispositif selon l'une des revendications précédentes, ayant pour caractéristique le fait qu'à l'obtention d'un taux d'impulsions de 100% des signaux de commande du composant de réglage "n", le composant de réglage "n+1" est successivement connecté, et alimenté, avec un signal de commande (16), par un taux d'impulsions supérieur à 0%.

7. Dispositif selon une des revendications précédentes, ayant pour caractéristique le fait que pour le ralentisseur (12) on utilise une batterie comme source de courant (22).

8. Dispositif selon une des revendications précédentes, ayant pour caractéristique le fait qu'un dispositif de sous-tension (24) déconnecte les signaux de commande (16) lorsque la tension de la source de courant (22) est inférieur à une valeur seuil.

9. Dispositif selon une des revendications précédentes, ayant pour caractéristique le fait qu'un dispositif d'élévation de la température (26) déconnecte les signaux de commande (16) lorsque la température du dispositif (10) et/ou du ralentisseur (12) est supérieure à une valeur seuil.

10. Dispositif selon une des revendications précédentes, ayant pour caractéristique le fait que le taux d'impulsions du train d'impulsions des signaux de commande (16) pour le ralentisseur (12) est variable en fonction de la vitesse du véhicule.

11. Dispositif selon une des revendications précédentes, ayant pour caractéristique le fait qu'au moyen des signaux de commande (16) la puissance de freinage du ralentisseur (12) augmente lorsque que le véhicule augmente sa vitesse, et baisse lorsque que le véhicule baisse sa vitesse, de sorte que la vitesse est maintenue constamment à une valeur réglable.

12. Dispositif selon une des revendications précédentes, ayant pour caractéristique le fait qu'un raccord (28) de chaque bobine (18) ou paire de bobines du ralentisseur (12) est relié à un pâle (32) de la source de courant (22) par l'intermédiaire d'un semiconducteur de puissance (14) et d'une résistance de précision (30) placée consécutivement, l'autre raccord (34) étant relié à l'autre pôle (36) de la source de courant (22).

13. Dispositif selon la revendication 12, ayant pour caractéristique le fait qu'à chaque bobine (18) ou à chaque paire de bobines est connectée en parallèle une diode (38) polarisée dans le sens de non-conduction.

14. Dispositif selon une des revendications précédentes, ayant pour caractéristique le fait que le signal de commande (16) est produit au moyen d'un microcontröleur (40), sont la sortie (42) est reliée à une entrée de commande (46) du semiconducteur de puissance (14) par l'intermédiaire d'un circuit d'attaque (44).

15. Dispositif selon la revendication 14, ayant pour caractéristique le fait qu'au microcontrôleur (40) sont amenés au moins un des signaux suivants en tant que signaux d'entrée : signal de la valeur théorique (48) pour la puissance de freinage du ralentisseur (12), en particulier en tant que signal digital par degrés (50) ; signal tachymétrique ou de vitesse du véhicule (52) ; signal manipulateur (54) pour activer la puissance de freinage du ralentisseur (12) en fonction de la vitesse et/ou mémorisation de la valeur momentanée de la vitesse du véhicule ; données de mémoire (56) d'un dispositif d'enregistrement (58) pour une répartition préréglable de la puissance de freinage sur les bobines (18) ou paires de bobines et/ou pour une commande séquence-temps de l'excitation des bobines (18) ou paires de bobines du ralentisseur (12).

16. Dispositif selon la revendication 14 ou 15, ayant pour caractéristique le fait qu'au microcontrôleur (40) ou au circuit d'attaque (44) (en tant que signal d'entrée) sont amenées la tension de la source de courant (22) et/ou la température du dispositif (10), en particulier du composant de réglage ou du ralentisseur (12).

17. Dispositif selon l'une des revendications 14 à 16, ayant pour caractéristique le fait que le microcontrôleur (40) comporte une sortie (60) dont le signal indique l'activation du dispositif (10), la sortie (60) étant de préférence reliée à une électronique de commande du moteur du véhicule.

18. Dispositif selon une des revendications 14 à 17, ayant pour caractéristique le fait que le microcontrôleur (40) ou le dispositif d'enregistrement (58) comportent une interface de PC (62) pour contrôler et éventuellement modifier les données de mémoire stockées dans le dispositif d'enregistrement (58).

19. Dispositif selon une des revendications 14 à 18, ayant pour caractéristique le fait qu'en cas de baisse du signal de la vitesse en dessous d'une valeur seuil d'environ 4 km/h, le ou les ralentisseurs (12) sont déconnectés au moyen du signal de commande (16), en particulier après un court délai.

20. Dispositif selon la revendication 17 ayant pour caractéristique le fait que la sortie (60) est de préférence une sortie de relais, et sert en particulier à exciter un voyant de contrôle qui signale au conducteur l'activation ou la désactivation du ralentisseur (12).

21. Procédé pour le fonctionnement d'un dispositif selon une des revendications 1 à 20, ayant pour caractéristique le fait que l'on alimente un ou plusieurs composants de réglage avec chaque fois un signal de commande, dont le taux d'impulsions s'élève à 0% ou 100%, et où on alimente au moins un autre composant de réglage avec un train d'impulsions, dont le taux d'impulsions est supérieur à 0% et inférieur à 100%.

22. Dispositif selon la revendication 21, ayant pour caractéristique le fait qu'à l'obtention d'un taux d'impulsions de 100% des signaux de commande du composant de réglage "n", on mette en circuit successivement le composant de réglage "n+1", tout en l'alimentant avec un signal de commande d'un taux d'impulsions supérieur à 0%.
